# EUROPEAN PATENT SPECIFICATION

(11) **EP 1 745 420 B1**
(45) Date of publication and mention of the grant of the patent: **08.10.2008**
(21) Application number: 05733788.3
(22) Date of filing: 03.05.2005
(51) Int. Cl.: G06K 19/18, G06K 19/10

(54) **IDENTIFICATION SYSTEM USING MECHANICAL VIBRATIONS ON IDENTIFIER**
IDENTIFIKATIONSSYSTEM MIT VERWENDUNG MECHANISCHER VIBRATIONEN AUF DEM IDENTIFIZIERER
SYSTEME D'IDENTIFICATION FAISANT INTERVENIR DES VIBRATIONS MECANIQUES SUR UN IDENTIFIANT

(30) Priority: 05.05.2004 EP 04101921; 15.07.2004 EP 04103381
(43) Date of publication of application: 24.01.2007
(73) Proprietor: Koninklijke Philips Electronics N.V., 5621 BA Eindhoven (NL)
(72) Inventor: AARTS, Ronaldus, M., NL-5656 AA Eindhoven (NL); AKKERMANS, Antonius, H., M., NL-5656 AA Eindhoven (NL); TUYLS, Pim, T., NL-5656 AA Eindhoven (NL)
(74) Representative: Uittenbogaard, Frank
(86) International application number: PCT/IB2005/051436
(87) International publication number: WO 2005/106783

(56) References cited:
- JP-A- 2002 183 685
- US-A- 5 756 220
- US-A1- 2001 010 333
- PAPPU R ET AL: "Physical one-way functions" SCIENCE, AMERICAN ASSOCIATION FOR THE ADVANCEMENT OF SCIENCE,, US, vol. 297, no. 5589, September 2002 (2002-09), pages 2026-2030, XP002285061 ISSN: 0036-8075

## Description

The invention relates to an identification system, to an apparatus for identifying an identifier body, to an identifier device, to an information carrier, and to a method for identifying an identifier body. The invention further relates to a key generation system, to an apparatus for generating a key from an identifier body, and to a method for generating a key from an identifier body.

An embodiment of an identification system of the type described in the opening paragraph is known from US-6584214, according to which three-dimensional characteristics of a complex physical structure are used in a function to identify the structure. The physical structure may be a token of inhomogeneous material, e.g. a polymeric matrix containing granular particles or bubbles permanently suspended, and it can be irradiated with a coherent light beam so that a speckle pattern can be detected on a photodetector adequately positioned with respect to the radiation source and the token. The speckle pattern depends on both the internal microstructure of the token and on the incident radiation, and therefore represents a response of the physical structure, i.e. a physical function, to the incident radiation, i.e. a challenge.

Due to the prohibitive difficulty of physically cloning the physical structure or even only building a mathematical model of it, such a structure is suitable for being used as an identifier body in an identification system. Such an identifier body may be embedded in or associated with an item, for example a credit card, to facilitate its authentication. In detail, each time the item has to be used, before enabling its usage, an authentication procedure takes place during which the identifier is challenged with a challenge and the response obtained is compared with an expected response, which has been previously gathered in the so-called enrollment phase.

It is a disadvantage of the known system that it involves a relatively complex detection of the response, requiring in particular the use of a photodetector, which is a complex and expensive component.

In order to prevent illicit copying and theft of a password to a card and a key it is proposed in JP 2002-183685 A that, when inserting an individual identification card into a terminal communication device, a pulse is generated by a first bipolar pulse generator. When this pulse is impressed on a proper encoding interdigital electrode, a proper encoding elastic surface wave is excited in a first piezoelectric base board. The proper encoding elastic surface wave is successively detected by interdigital electrodes, as a proper encoding burst signal. A synthetic output signal of the proper encoding burst signal in the interdigital electrodes is converted into a proper double encoding digital signal by a unipolar pulse generator via an envelope detector, and is transmitted in a digital network via a terminal. When the proper double encoding digital signal is received by a main communication device from the digital network, the holder of an individual identification card is authenticated. The independent claims are delimited against this prior art.

According to US 5,756,220 a large number of magnetic polymer elements are distributed at random in a base material of a object to be checked. Each magnetic polymer element includes an element main body formed of a high-molecular material, such as an acrylic resin, and magnetic metal powder contained therein. The base material is formed mainly of paper, and the magnetic polymer elements are incorporated together with wood pulp fibers in the base material. The elements and the fibers are tangled with one another in three dimensions. Indication data including figures, symbols, etc., such as post position numbers and bet numbers on betting tickets for publicly-managed gambling, are printed on the object. The indication data, along with a proper output signal obtained in accordance with the state of distribution of the magnetic polymer elements, are enciphered according to specific rules for enciphering, and are recorded in a code indicator section by means of a recording medium, such as a magnetic stripe which is magnetically readable or a bar code which is optically readable.

An instrument (e.g., a card or an optical data storage disc such as a CDROM) according to US 2001/010333 includes a pattern formed on or within the instrument, whereby the instrument, when illuminated by a light source, produces a unique output light pattern which can be detected by a photo sensor. The formed pattern may take any number of different and randomly formed shapes ranging from stripes of different size and spacing, as in a bar code, to complex two dimensional shapes and images. The pattern formed between the top and bottom surfaces of an instrument may include randomly distributed light pipes (paths) extending from one side of the instrument to one, or more, other side(s) of the instrument. Alternatively, the pattern formed between the top and bottom surfaces may include a number of "pitted" optical fibers extending from a side of the instrument to a "hidden" region internal to the instrument, which does not extend to any of the sides or surfaces of the instrument. Alternatively, the pattern formed between the top and bottom surfaces of the instrument (e.g., a CDROM) may include opaque optical fibers extending within a region of the instrument. Alternatively, a pattern may be formed on an instrument (e.g., a CDROM) by laser etching or scribing a random pattern on a surface of the instrument.

Cryptographic key generation based on optical properties of a 3D inhomogeneous token is suggested by R. Pappu et al. in "Physical one-way function" Science, 20 September 2002, Vol. 297. no. 5589, pp. 2026 - 2030.

It is a first object of the invention to provide an identification system which allows for a relatively simple identification of an identifier body.

It is a second object of the invention to provide an apparatus for identifying an identifier body which allows for a relatively simple identification of the identifier body.

It is a third object of the invention to provide an identifier device which can be identified by a relatively simple apparatus.

It is a fourth object of the invention to provide an information carrier which can be identified by a relatively simple apparatus.

It is a fifth object of the invention to provide a method for identifying an identifier body which allows for a relatively simple identification of the identifier body.

It is a sixth object of the invention to provide a key generation system which allows for a relatively simple generation of a key.

It is a seventh object of the invention to provide an apparatus for generating a key from an identifier body which allows for a relatively simple generation of the key.

It is an eighth object of the invention to provide a method for generating a key from an identifier body which allows for a relatively simple generation of the key.

According to the invention the first object is achieved by an identification system as claimed in claim 1.

The invention is based on a new insight on the propagation of a mechanical vibration in a body.

Experiments conducted by the inventors have shown that the three-dimensional characteristics of a body comprising a non-homogeneous non-isotropic material, like for example a token of polymeric matrix containing inhomogeneities, directly affects the propagation of a mechanical vibration in a way that distinctively reflects said three-dimensional characteristics, like for example quantity, size, shape, and position of the inhomogeneities. Subjecting the body to a mechanical vibration, and observing the propagation of the mechanical vibration in a first instance, allows for the identification of the body in a second instance, by again observing the propagation of a mechanical vibration produced in similar conditions, and comparing it with the previous observation.

These experiments have therefore shown that such a body is suitable for being used as an identifier, or identifier body, in an identification system, because some of its properties enable it to be distinguished from other bodies and recognized. Clearly, for the same reasons, such a body can also be used for the generation of an encryption/decryption key, a unique identification number, or random numbers. The identifier body is challenged by applying to it the first mechanical vibration, while the response is the second mechanical vibration due to the first mechanical vibration propagating through the identifier body. The response is detected and then compared with the authentication information which is related to the expected response, i.e. the response which is expected upon challenging the identifier body with the challenge based on a previous observation, so as to identify the identifier body, that is to distinguish it from different bodies.

The identification system according to the invention allows for a simple identification of the identifier body, in particular simpler than in the known identification system, which is based on an optical identification. In fact, the challenging unit and detection unit are easy to implement, since generating a mechanical vibration for example from an electrical signal and vice versa requires the use of components such as transducers which are simple and inexpensively available in the market The use of a photodetector, like in the known identification system, can be dispensed with, resulting in a simplification, both in the mechanical aspects of the apparatus and in the processing of the response detected. A further advantage is that the tolerances relevant to mechanical registration of the challenging unit and detection unit with respect to the identifier body are relatively less constrained in the identification system according to the invention than in the known identification system, mainly due to the longer wavelength of the frequencies involved.

Preferably the first mechanical vibration is applied on a first point of the identifier body, and the second mechanical vibration is detected on a second point of the identifier body, as it is claimed in claim 2.

In an embodiment, the identification system according to the invention has the features claimed in claim 3. In this embodiment, multiple challenges are allowed, this measure aiming at strengthening the security of the identification system. In fact, while an attacker may attempt to observe the response produced when the identifier is being challenged with the challenge during an authentication phase, and, based on this observation, tries to fool the identification system during a subsequent authentication phase, the difficulty of doing so increases with the number of challenges that can be generated and used for the identification. The availability of multiple challenges opens up a number of possibilities for the implementation of the authentication phase, which can foresee the use of one, some or all of the available challenges. If one or some of the available challenges are used, preferably these can be chosen randomly or in any non-repetitive way, so as to even further increase the difficulty to carry out an attack.

The identification system according to claim 3 also exploits an additional advantage of the identification system according to the invention, said advantage being that it is an inherently slow response system, due to the fact that a mechanical vibration propagates relatively slowly through a solid material. A slow response system makes it very difficult for an attacker to try to fool the identification system by observing responses to all possible challenges as outlined in non pre-published European Patent Applications 03104226.0 and 03103931.6 (respectively PHNL031345 and PHNL031296).

A first possibility of providing an identification system according to the invention with multiple challenges and respective responses is described in the characterizing features of claim 4, according to which different periodic mechanical vibrations can be generated.

In particular, the used frequency may lie in the audible range of frequencies, allowing for audio transducers, which are easily available and simple, to be used as the transducers.

A second possibility, which can be used also in combination with the first, is given by the characterizing features of claim 5. In fact, varying at least one of the first point and the second point has the effect of varying the response obtained, and therefore effectively means that a different challenge is applied.

The identification system according to the invention may comprise an information carrier coupled to the identifier body, and an apparatus for accessing the information carrier as claimed in claim 6. In this case the identifier body may be used for the authentication of the information carrier which is coupled to the identifier body, thus allowing for the implementation of a conditional access and/or a copy protection scheme. In particular, the identifier body may be embedded in the information carrier; alternatively, the information carrier itself may be treated as the identifier body.

In an embodiment, the identification system according to the invention has the features of claim 7, according to which the challenging unit and the detection unit are comprised in an apparatus for identifying the identifier body.

In another embodiment, alternative to the embodiment relevant to claim 7, the identification system according to the invention has the features of claim 8. This system is particularly robust because, due to the fact that the transducers are incorporated together with the identifier body in an identifier device, the first and the second vibrations are consistently generated/detected at fixed positions of the identifier body, thus allowing even further simplification in mechanical aspects identification system. The requirement of accurate mechanical registration of the identifier body in respect with the challenging unit and detection unit, which is present in the known identification system is completely overcome according to this embodiment.

In an identification system according to claim 7 or 8, the apparatus for identifying the identifier may also comprise the verification unit; alternatively, the verification unit may be accommodated in a remote computer connectable to the apparatus, or it may be distributed between the apparatus and the remote computer.

Furthermore, the authentication information may be stored in the information carrier, in a memory present in the verification unit, or in a remote database connectable to the apparatus for identifying the identifier, each of these possibilities being the most suitable according to the type and intended use of the information carrier. As a measure to further increase the level of security, the authentication information may also be distributed among at least two of the information carrier, the memory present in the verification unit, and the remote database.

In an identification system according to claim 7 or 8, wherein an information carrier and an apparatus for accessing the information carrier are present as claimed in claim 6, the apparatus for identifying the identifier body and the apparatus for accessing the information carrier may be integral with each other, so that a single apparatus can be used both for identifying the identifier body and for accessing the information carrier.

The idea of varying the first point and/or the second point, when applied to an identification system according to claim 8, can advantageously be implemented by means of the characterizing features of claim 9. In this embodiment at least one of the challenging unit and the detection unit comprises an additional transducer; therefore, by selectively enabling the different transducers it is possible to augment the number of challenges and consequent responses. In addition, or alternatively, the first transducer and the second transducer can interchange their function, as claimed in claim 10, which has the same effect of augmenting the number of challenges and consequent responses.

According to the invention, the second object is achieved by an apparatus for identifying an identifier body, according to claim 11, as apparent from the foregoing discussion. If the identifier body is not comprised, along with the first transducer and the second transducer, in an identifier device, as described in claim 8, then the first transducer and the second transducer may be incorporated respectively in the challenging unit and the detection unit of the apparatus, as claimed in claim 12.

According to the invention, the third and the fourth objects are achieved by respectively an identifier device as claimed in claim 13 and by an information carrier as claimed in 16.

In advantageous embodiments the identifier device may have the features claimed in claims 14 or 15.

According to the invention, the fifth object is achieved by a method for identifying an identifier body as claimed in claim 17.

According to the invention, the sixth, the seventh and the eighth objects are achieved by respectively a key generation system as claimed in claim 18, by an apparatus for generating a key from an identifier body as claimed in claim 19, and by a method for generating a key from an identifier body as claimed in claim 20.

These and other aspects of the identification system, apparatus, identifier device, information carrier, and method according to the invention will be further elucidated and described with reference to the drawings. In the drawings:
Fig. 1 shows a first embodiment of the identification system according to the invention,
Figs. 2a and 2b show different identifier bodies and the respective responses produced when they are challenged with the same challenge,
Fig. 3a illustrates the property of an identifier body to act as a physical function,
Fig. 3b shows an implementation of the authentication information with a view to using it for a secure authentication of an information carrier,
Fig. 4 shows a second embodiment of the identification system according to the invention, applied for the authentication of an information carrier,
Fig. 5 shows a third embodiment of the identification system according to the invention, applied for implementing a conditional access scheme for an information carrier,
Fig. 6 shows a fourth embodiment of the identification system according to the invention, applied for implementing a copy protection scheme for an information carrier,
Fig. 7 shows a fifth embodiment of the identification system according to the invention, involving the use of an identifier device,
Figs. 8a and 8b show modifications and improvements of the embodiment of the identification system shown in Fig. 7,
Fig. 9 shows an embodiment of the key generation system according to the invention.

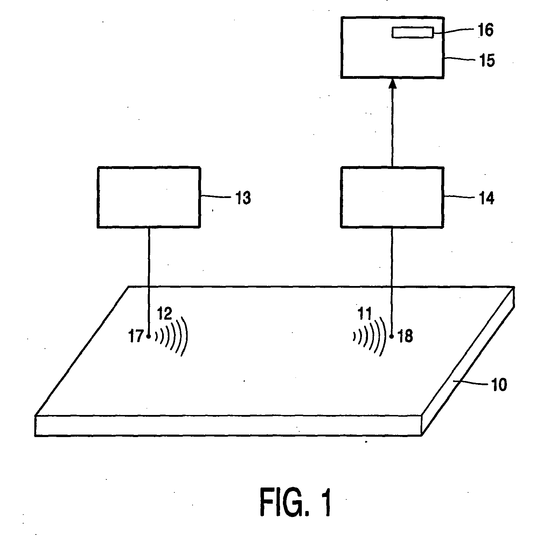

Fig. 1, which shows a first embodiment of the identification system according to the invention, comprises an identifier body 10, a challenging unit 13 for challenging the identifier body 10 with a challenge 12, a detection unit 14 for detecting a response 11 and a verification unit 15 for comparing the response 11 detected with authentication information 16, which is related to an expected response, i.e. related to the response 11 if the authentication information 16 is linked to the identifier body 10.

The comparison made by the verification unit 15 must not be intended as a mere comparison of two values, but may involve for example the processing of at least one of the response 11 and the authentication information 16 before, strictly speaking, a comparison takes place. Dependent on whether or not the comparison results in a match, the identifier device 10 is recognized or not

According to the invention, the challenge 12 is a first mechanical vibration applied to the identifier body 10 so as to cause a second mechanical vibration, which second mechanical vibration is detected as the response 11.

The first mechanical vibration may be applied on a first point 17 of the identifier body 10, from where it propagates through the identifier body 10 to a second, different, point 18; the second mechanical vibration, in this case, is represented by the mechanical vibration present at the second point 18. However, the second mechanical vibration can also be represented by a mechanical vibration at the same point 17 of the identifier body 10 where the first mechanical vibration has been applied, however, only after a time sufficient for the first mechanical vibration to reverberate within the identifier body 10 has elapsed.

The identifier body 10, in principle, can be any piece of inhomogeneous material, in any suitable shape, for example parallelepiped or cylindrical. It could for example consist of a resin in a cured state having inhomogeneities dispersed therein. As an alternative it may consist of two or more layers of different materials, conjoined by irregular interfaces.

The inhomogeneities or irregular interfaces present in the identifier body 10 affect the propagation of a mechanical vibration within it in a way that distinctively reflects the three-dimensional characteristics of the identifier body 10, as compared to identifier bodies having different three-dimensional characteristics.

In order for the identifier body 10 to be unique, the inhomogeneous material can be produced by means of a random non-reproducible process, like for example dispersing granular particles or bubbles in a resin in a fluid state, curing the resin and cutting a portion therefrom.

An identifier body thus obtained may be prohibitively difficult to physically clone, especially when inhomogeneities are present in a high number, are of variable type, and of microscopic size.

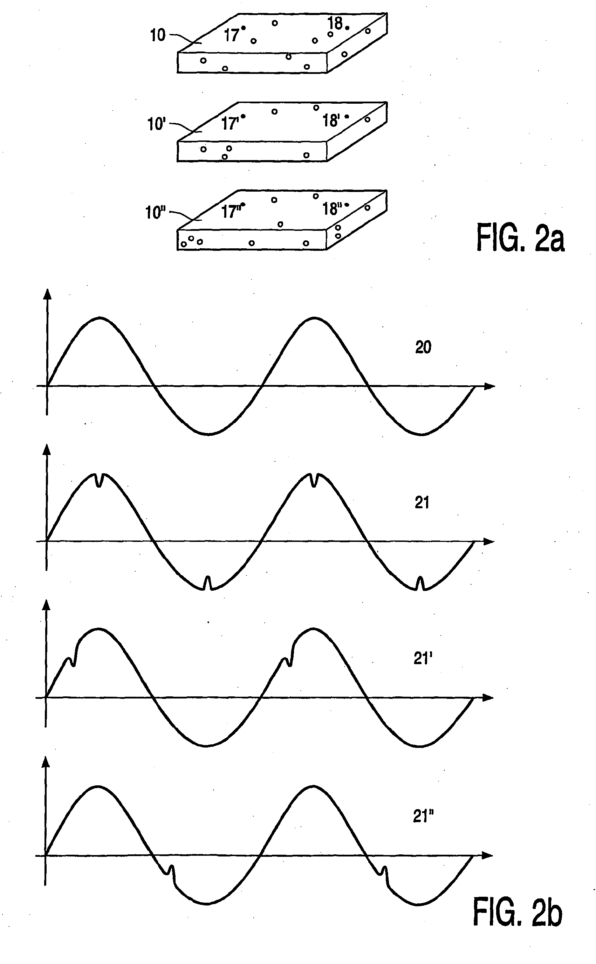

Fig. 2a shows three identifier bodies 10, 10', 10", having the same size, shape and other macroscopic features, but different three-dimensional characteristics, i.e. inhomogeneities are present in each of the three identifier bodies, 10, 10', 10", in different numbers and/or positions, and possibly have a different size and/or shape. The same challenge 12 is applied to the three identifier bodies 10, 10', 10", meaning that the same first mechanical vibration is applied in first points 17, 17', 17" of the three identifier bodies, 10, 10', 10", which first points are in the same relative position, and that respective second mechanical vibrations are detected as responses 11, 11', 11" in second points 18, 18'; 18" of the three identifier bodies, 10, 10', 10", which second points 18, 18', 18" are in the same relative position. A mechanical vibration is associated with a displacement of a particle from a rest position, which amplitude versus time can be represented in a graph. In Fig. 2b are shown the graph 20 representing the first mechanical vibration 12 and the graphs 21,21', 21" of respectively the three responses 11, 11', 11". The graphs 21,21',21" are different as a consequence of the different three-dimensional characteristics of the three identifier bodies, 10, 10', 10", which therefore can be recognized, or identified, by observing the respective responses 11, 11', 11''.

It is therefore observed that an identifier body subjected, as described above, to mechanical vibrations, possesses the necessary features for properly being used as an identifier in an identification system:
- it has a property, i.e. its challenge-response behavior, that makes it distinguishable from any other identifier body,
- it is very difficult to physically clone,
- it is very difficult to model, i.e. to construct a mathematical relationship by means of which it is possible to predict the response to a given challenge, or to deduct the challenge causing a given response.

In an authentication phase, as explained hereinabove, the identifier body 10 is identified by comparing the response 11 with authentication information 16. The authentication information 16 is derived from a previous observation of the response 11. In particular, the authentication information 16 can be determined during what is usually referred to as an "enrollment phase", during which the identifier body 10 is subjected to the challenge 12 as it would during any authentication phase. The consequent response 11 is detected and information related to it, i.e. the authentication information 16, is determined. The authentication information 16 may be a record of the response 11 detected, or a collection of measurements performed on the response 11 detected, for example the amplitude of the first harmonic, the amplitude of some higher harmonics, and the phase shift in respect of the phase of the first mechanical vibration.

Alternatively, the authentication information 16 may be the result of a mathematical function applied to such a record or collection of measurements. Said function may be a secret function and/or a one-way function such as a hash function.

Therefore, as anticipated, the comparison made during an authentication phase by the verification unit 15 must not be intended as a mere comparison of two values. In the most straightforward application, the same operations applied to the response 11 to determine the authentication information 16 during the enrollment phase are applied also to the response 11 detected during an authentication phase; so as to obtain an intermediate result, before a comparison, strictly speaking, takes place between this intermediate result and the authentication information 16. As an alternative, further processing of the authentication information 16 may be necessary as well, for example if the authentication information 16 is in an encrypted form, which has to be decrypted prior to the comparison.

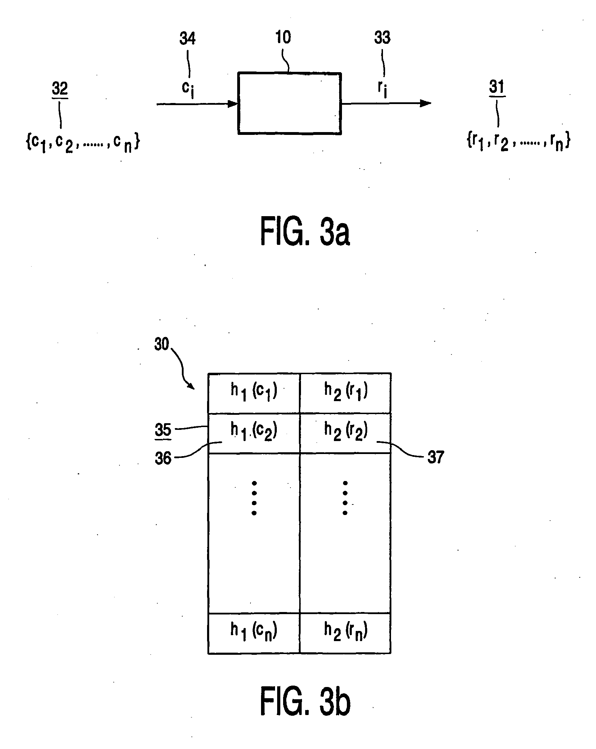

Fig. 3a illustrates the property of the identifier body 10 to act as a physical function.

The identifier body 10, which acts as a physical function, receives as an input a challenge 34 representative of a set of challenges 32 which can be applied to the identifier body 10, and produces as an output a respective response 33 belonging to a set of respective responses 31.

There are several ways to apply different challenges, for example by applying different mechanical vibrations, i.e. mechanical vibrations representable with different graphs. If, for example, the first mechanical vibration is a periodic vibration, the amplitude, frequency and/or waveform of the periodic vibration can be varied in order to obtain different responses. Different responses can be obtained also by varying at least one of the fist point and the second point. For the purpose of this discussion the term challenge is intended to comprise the first mechanical vibration applied, and the selection of both the first point and the second point, since all of these terms have influence on the response detected.

This property can be used in order to make the identification system more secure, since the identification of the identifier body 10 can be made dependent on one or more responses out of the set of respective responses 31, instead of on a single possible response 11. Such an identification system is more secure than an identification system based on a single response 11, because an attacker may try to fool the verification unit 15 by artificially providing the response 11 to the detection unit 14 which has been observed in a previous authentication phase. However, the difficulty of carrying out such an attack increases with the number of possible responses, since the attacker must have observed all challenges and responses prior to his attempt to fool the system. The identification may be carried out by challenging the identifier body 10 with a subset of challenges belonging to the set of challenges 32, where the set of challenges 32 comprises a large number of challenges, for example thousands, and the subset only comprises one or a few challenges, which are chosen randomly or in any other non-repetitive manner from the set of challenges 32 at every authentication phase.

In this case, advantageously, the authentication information 16 may have the form of a table 30, as shown in Fig. 3b, wherein each row represents a record 35 relevant to a challenge 34 belonging to the set of challenges 32. The record 35 has in a first field 36 the result of a first one-way function applied to the challenge 34, and in a second field 37 the result of a second one-way function applied to the corresponding response 33.

The authentication information 16 may further contain information indicative of what challenges exactly belong to the set of challenges 32. Further details and a relevant embodiment of a method of authentication based on authentication information 16 so constructed can be found in non pre-published European Patent Application 04100710.5 (PHNL040178).

Such an identification system can be applied for the authentication of an object associated with the identifier body 10, the only condition being that the association between the object and the identifier body 10 is difficult to break or tamper with. In a typical embodiment this object may be an information carrier. This application may be useful for any type of information carrier for which it is important to assess whether the information carrier and/or any information contained therein hasn't been counterfeited, such as for example credit cards, bank cards, client cards, cards for containing electronic money, any other type of smart cards or badges, or information carriers for copy-protected content like for example optical disks for containing music, movies or software such as CDs or DVDs.

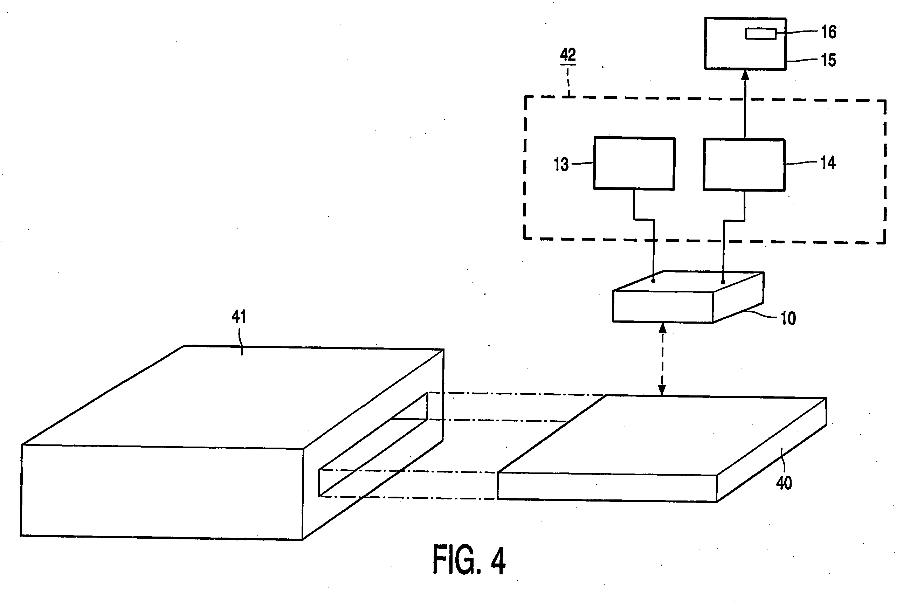

Fig. 4 shows an embodiment of the identification system according to the invention, in which the identifier body is associated with an information carrier. In this embodiment the identification system further comprises an information carrier 40 associated with the identifier body 10, and an apparatus for accessing the information carrier 41. The challenging unit 13 and the detection unit 14 are grouped together in an apparatus for identifying the identifier body 42. This apparatus for identifying the identifier body 42 may comprise various other parts, and in particular a microprocessor for operating the challenging unit 13 and the detection unit 14 and a memory for storing a program. The apparatus for identifying the identifier body 42 may be in a stand-alone configuration or connected via a network to a remote computer, along with similar apparatuses.

The verification unit 15 may also be part of the apparatus for identifying the identifier body 42, especially if the apparatus for identifying the identifier body 42 is in a stand-alone configuration; however, if the apparatus for identifying the identifier body 42 is connected to a remote computer, then the verification unit 15 may also be accommodated in the remote computer, or may even be distributed between the remote computer and the apparatus for identifying the identifier body 42.

The authentication information 16 may be permanently stored in a memory present in the verification unit 15; however, it may also be present in the information carrier 40 or in a remote database connectable to the apparatus for identifying the identifier body 42. In the latter cases, prior to a verification, the authentication information 16 needs to be transferred to the verification unit 15. The first possibility may be the most suitable for an application wherein the information carrier 40 is repetitively accessed by a single apparatus, for example a badge reader at the entrance of a building; the second possibility appears to be the most suitable for information carriers carrying copy-protected content, whereas the third possibility appears to be the most suitable for e.g. credit cards and bank cards. As a measure to further increase the level of security, the authentication information 16 may also be distributed among at least two of the information carrier 40, a memory present in the verification unit 15, and a remote database.

There are various ways of implementing the association between the identifier body 10 and the information carrier 40 in such a manner that this association is difficult to break or counterfeit. The identifier body 10 may be embedded in the information carrier 40, or may be integral with it, in such a way that an attempt to remove, substitute or modify the identifier body 10 would result in fatal damage to the information carrier 40 and/or to the identifier body 10.

A similar effect is obtained when the authentication information 16 is stored in the information carrier 40, even when the identifier body 10 and the information carrier 40 are physically separate, because the authentication information 16 can be stored in a way that makes it extremely difficult to be modified and because the authentication information 16 relevant to an identifier body 10 is extremely unlikely to be equal to other authentication information relevant to another identifier body.

Therefore, according to this embodiment, the identification system of the invention can be used for the authentication of an information carrier 40. The information carrier 40 may also be an information carrier recordable by the user, like for example an information carrier similar to a CD-R or a CD-RW, with a view to the system allowing controlled copying of copy-protected material, possibly in exchange for levies incorporated in the price of the blank recordable information carrier.

The identification system of the invention, however, can also be used for purposes other than the identification of an information carrier, such as for example for the generation of unique identifier numbers or encryption/decryption keys. In various applications the identifier body 10 may be embedded in a chip and be used for the generation of a chip unique identifier number, or the whole identification system may be embedded in a terminal, such as an ATM machine, to allow its authentication.

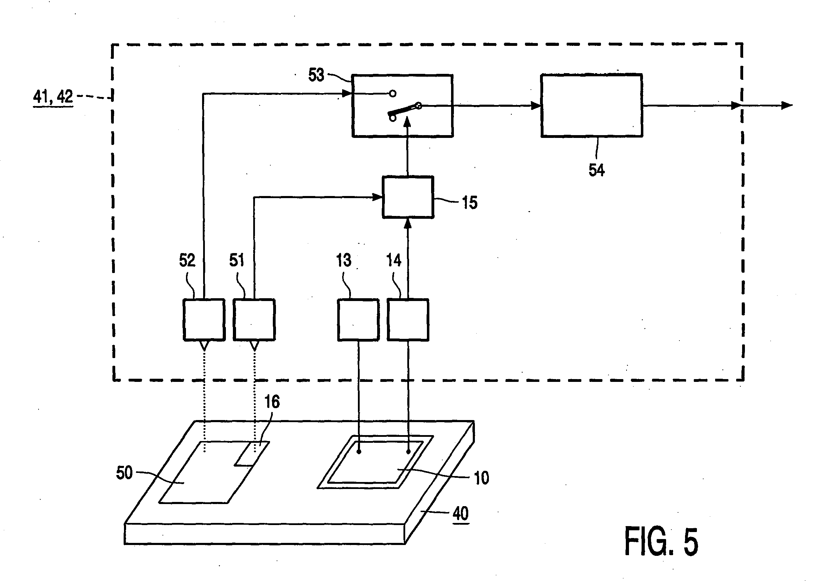

The assessment made by the verification unit 15 to ascertain whether the information carrier 40 is authentic or not can be exploited for the implementation of a conditional access scheme, as shown in Fig.5. In this embodiment, the identifier body 10 is embedded in an information carrier 40, which information carrier 40 comprises user-information 50 and the authentication information 16. The apparatus for accessing the information carrier 41 and the apparatus for identifying the identifier 42 are integral with each other. When the information carrier 40 is inserted into the apparatus 41, 42 the authentication information 16 is read by an authentication information-reading unit 51, and transferred to the verification unit 15. The user-information 50 is read by a user-information reading unit 52, and transferred to a rendering unit 54, via a conditional access unit 53, which enables the transfer of the user-information 50 to the rendering unit 54 only on condition that the verification unit 15 has ascertained that the information carrier 40 is authentic, i.e. the response or responses to a given challenge or challenges are as expected.

As an alternative to the conditional access unit 53, a warning message can be generated if the information carrier 40 is found not to be authentic, or the information on the authenticity of the information carrier 40 can simply be stored for later use.

It is also possible that only a part of the user-information 50 is subject to conditional access, whereas free unconditional access is offered to the remaining user-information. If the information carrier 40 is intended for allowing the holder to perform certain operations, e.g. withdrawal of money from a bank account, the conditional access unit 53 is to enable such operations.

The user-information 50 for which the information carrier 40 is intended may be, for example, an audio recording, a movie, a computer program, or, especially in the case of a smart card, details of the card holder or a card identification number, to enable the card holder to perform certain operations.

In the drawing it is shown that the user-information 50 and the authentication information 16 are read by two distinct units, however, it is also possible that authentication information-reading unit 51 and the user-information reading unit 52 are integral with each other.

The authentication information 16 may be related only to the response 11, i.e. independent of any other data present on the information carrier 40, and in particular of the user-information 50, or it may be related further to other data present on the information carrier 40. For example, if the information carrier 40 is a smart card containing personal details of the holder as the user-information 50, the authentication information 16 may be a cryptographic summary of the personal details and of the response 11.

The authentication information 16 present in the information carrier 40 can be prerecorded thereon, after initially having been determined during an enrollment phase. The authentication information 16 may occupy a predefined section of the storage space which is also designed to contain the user-information 50, preferably a section where no interference with any user-access can occur and more preferably a section that is treated such that it is completely invisible to the user, which section, in the case of an optical disk, could be represented by a section in the lead-in or the lead-out area. Alternatively, the authentication information 16 may be stored in a secondary storage space associated with a secondary channel in the information carrier 40, which, in the case of an optical disk, could be represented by the wobble channel, i.e. a channel of information embedded in the radial modulation of a spiral track.

The embodiment shown in Fig. 5 allows for a conditional access scheme which makes sure that compliant devices grant access to an information carrier 40 only when this is found to be authentic.

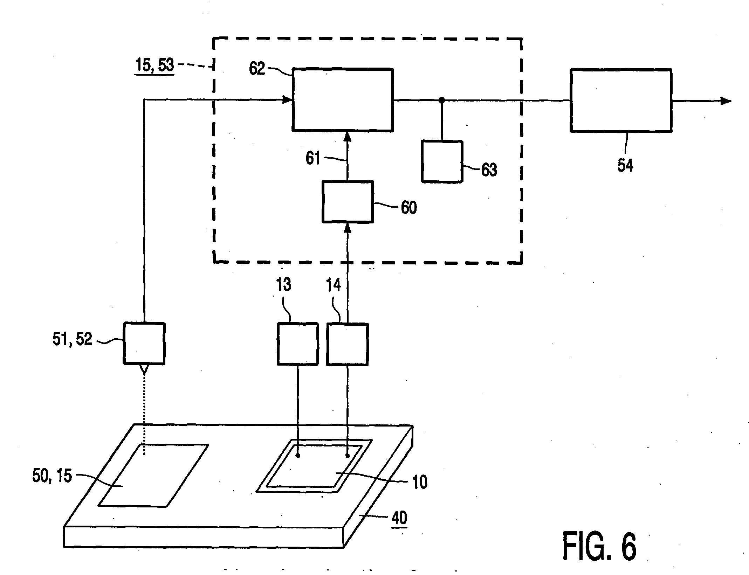

A further, advantageous, embodiment is shown in Fig. 6, according to which the user-information 50 present on the information carrier 40 is encrypted. A decryption key 61 can be extracted, by a decryption key extraction unit 60, from the response 11 detected by the detection unit 14. The decryption key 61 extracted is then used by a decryption unit 62 for decrypting the user-information 50 encrypted. In the simplest implementation a symmetrical encryption algorithm can be used, and the encryption/decryption key 61 is determined during the enrollment phase, after which the user-information 50 is encrypted and then stored in the information carrier 40. Valid user-information 50 can be retrieved only if the decryption key 61 extracted and used is the correct one, i.e. the one extractable when the response 11 is the expected response. In this embodiment the decryption key extraction unit 60 and the decryption unit 62 perform the function of both the verification unit 15 and the conditional access unit 53, since valid information can be obtained only when the correct decryption key 61 is used. The fact that valid user-information 50 is being output by the decryption unit 62 may be self-evident or may be assessed looking at the format or at the content of the user-information 50: this operation may be performed by an additional unit referred to as user-information validity verifier 63. In this case, the entire user-information 50 can be seen as the authentication information 16. As an alternative, a special message can be embedded in the user-information 50, which special message can quickly be recognized when the user-information 50 is correctly decrypted. In this case the special message represents the authentication information 16.

This embodiment has the strong advantage that a bit-by-bit copy of the user-information 50 encrypted in a second information carrier, not having an identifier body or having a counterfeited, and therefore different, identifier body, would not be accessible even by a non-compliant apparatus.

In this way, a strong copy protection scheme can be achieved. This system can be further strengthened with techniques known in the art like, for example in the case of audio or video content, rendering the content only in an analog form outside a secure environment, e.g. a chip where the user-information 50 encrypted is decrypted, or embedding of a watermark-carrying Copy Control Information in the user-information 50 rendered. It has to be outlined that other implementations of a copy protection scheme are possible on the basis of the identification system of the invention. For example, a decryption key to decrypt user information 50 encrypted present on the information carrier 40 may be transmitted by a remote computer upon successful authentication of the information carrier 40.

As it has been said above, the identifier body 10 can be obtained as the result of an uncontrolled process, implying that two identifier bodies are inevitably different, therefore giving rise to different responses and different authentication information, so that each information carrier 40 has a possibly different and unique authentication information 16 and/or user-information 50 encrypted with a possibly different key 61. This consequence may be acceptable for a smart card wherein details about the user are stored, because the information to be stored is also in principle unique and therefore the fact that the authentication information 16 is unique does not significantly add complexity to the process of storing the overall information, details about the user and authentication information 16.

The same consequence may be unacceptable however for pressed optical disks, wherein the content, e.g. music, a movie, or software, has to be replicated on the large number of optical disks: in this case, in fact the presence of a section of information, the authentication information, which is different from disk to disk, would make the storing process very complex and expensive.

Interestingly, non pre-published European Patent Application 03103800.3 (PHNL031268) discloses a method of producing a plurality of information carriers having equal identifier bodies by means of a stamp obtained with an uncontrolled process, wherein the stamp is used in a controlled way to imprint a printable material so as to obtain equal optical identifiers. In combination with this technique, which can be used also for obtaining identifier bodies to be challenged by means of mechanical vibrations, the invention can conveniently be applied to a system wherein the information carrier is a pressed optical disk.

Experiments conducted by the inventors have established that two responses produced by two distinct identifier bodies subjected to the same challenge will show a small difference if said two distinct identifier bodies are very similar. The difference between two responses can be intended as the distance between the two relevant graphs, whereas two distinct identifier bodies can be said to be very similar if for example the number, position, size and shape of the inhomogeneities are almost equal in the two bodies. This represents a further advantage of the identification system according to the invention as compared to the identification system known from the prior art, where a small difference in the three-dimensional characteristics may result in a largely different speckle pattern. This feature in fact can advantageously be used to robustly detect the same response from a plurality of identifiers bodies, even in the case of some minor differences in the three-dimensional characteristics due to tolerances in the production process. For the same reason, the identification system according to the invention is also more robust against alterations that may occur in the identifier body, for example due to environmental changes or fingerprints present on the identifier body.

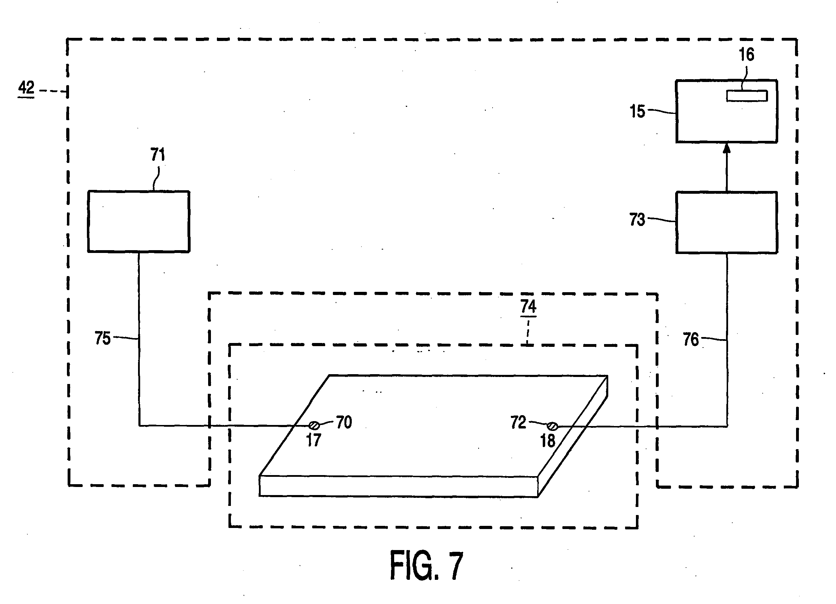

Fig. 7 shows a yet further embodiment of the identification system according to the invention, according to which the challenging unit 13 comprises:
- a first transducer 70, for emitting the first mechanical vibration; and
- a first transducer control unit 71, for controlling the first transducer 70; and the detection unit 14 comprises:
   - a second transducer 72, for detecting the second mechanical vibration; and
   - a second transducer control unit 73, for controlling the second transducer 72.

The first transducer control unit 71 and the second transducer control unit 73 are comprised in an apparatus for identifying the identifier body 42, whereas the first transducer 70 and the second transducer 72 are permanently fixed to the identifier body 10 and constitute, together with the identifier body 10, an identifier device 74.

This embodiment allows a remarkable mechanical simplification because the first point 17 and the second point 18 are fixed, and therefore the reproducibility of a given response does not need to rely on application of the corresponding challenge on precisely the first point 17 and detection of the response on precisely the second point 18 of the identifier body 10. The two transducers are controlled by the respective control units by means of electrical connections 75, 76 which are established as the result of the identifier device 74 being inserted in the apparatus for identifying the identifier body 42.

This identification system is inherently more robust and can be implemented with a smaller number of components and at a lower cost

The implication of replicating the two transducers for each identifier body 10 is seen as a minor problem, since the two transducers, especially if acoustical transducers are used, can be particularly inexpensive and small.

In this embodiment, the possibility to apply different challenges and therefore generate different responses entirely relies on applying mechanical vibrations representable with different graphs, the first point 17 and the second point 18 being fixed.

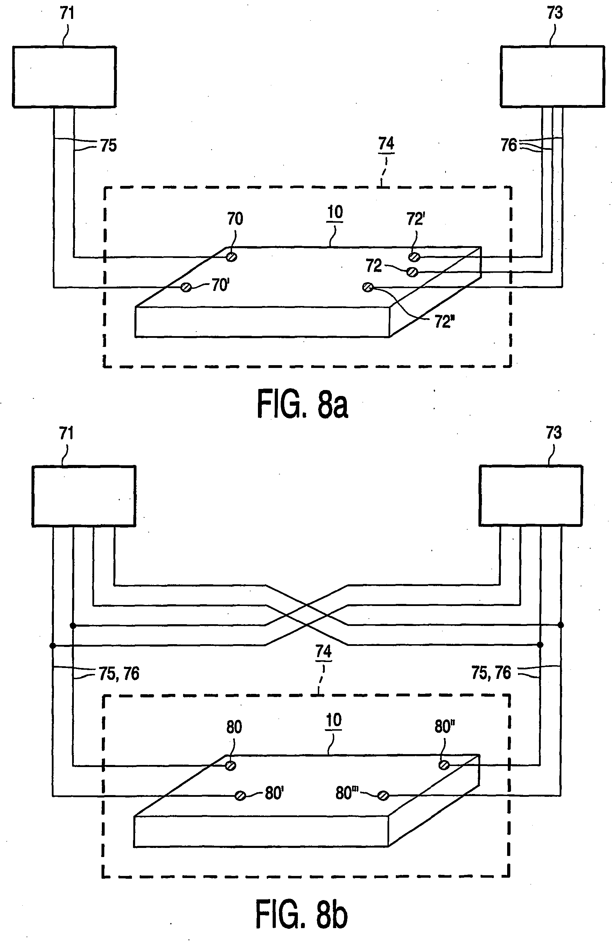

This limitation is overcome by a modification of this identification system, which is shown in Fig. 8a, according to which in the identifier device 74 a small plurality of first transducers 70, 70' and of second transducers 72, 72',72" are present in various locations of the identifier body 10.

The first transducer control unit 71 is adapted to selectively activate one of the first transducers 70, 70', and similarly the second transducer control unit 73 is adapted to selectively activate one of the second transducers 72, 72',72". In this way it is possible to augment the number of challenges and respective responses by using all possible combinations of the couple first transducer - second transducer.

The number of challenges and responses can be augmented even further according to another modification, which is shown in Fig. 8b. In this case the transducers are dual-use transducers 80, 80', 80", 80"', which can be used both for emitting the first mechanical vibration and for detecting the second mechanical vibration.

Each of the dual-use transducers 80, 80', 80", 80"' is controllable by both the first transducer control unit 71 and the second transducer control unit 73 for being used, respectively, as first transducer 70 and second transducer 72.

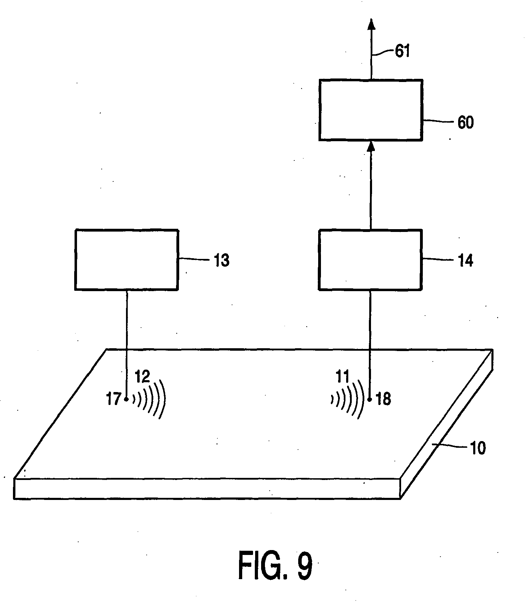

Fig. 9 shows an embodiment of the key generation system according to the invention. In fact, as it has been introduced above, the invention can also be used for the generation of keys or unique identifier numbers. A key generation system according to the invention differs from the identification system shown in Fig. 1 in that the response 11 is used by a key extraction unit 60 for extracting a key 61, thereby allowing the verification unit 15 and the authentication information 16 to be dispensed with. This key 61 can be used in an encryption scheme for a secure transaction, but can also be employed as an identifier number. The key 61 generated can also be seen as a random number, and therefore the key generation system according to the invention may also be used for the generation of random numbers.

The key extraction unit 60 may comprise a mathematical function, in particular a hash function, applied to a record or collection of measurements of the response 11. It has to be remarked that the key extraction unit 60 and the detection unit 14 may be integral with each other. In an embodiment, in particular, a measurement of the response 11 may be used directly as the key.

Similarly to the identification system according to the invention, such a key generation system may be used in two distinct phases: enrollment and key generation, for example session key generation. However, in some applications the key generation system according to the invention may be used in a single phase for the generation of a key, or identifier number.

In an embodiment, the key extraction unit 60 may comprise a mathematical algorithm which consists of a feature extraction part, a helper data part, an error correction code, and sometimes also a hash function. Helper data are data that are derived during the enrollment phase and used during the key generation phase. Their main goal is to allow the extraction of reliable features from the measurements and to provide some error correction information, so as to achieve repeatability of the key extraction. Hence the helper data can be seen as a means to remove the noise from the measurements.

Although the invention has been elucidated with reference to an identification system applied for the authentication of an information carrier, it will be evident that other applications are possible. The scope of the invention is therefore not limited to the embodiments described above.

It must further be noted that the term "comprises/comprising" when used in this specification, including the claims, is taken to specify the presence of stated features, integers, steps or components, but does not exclude the presence or addition of one or more other features, integers, steps, components or groups thereof. It must also be noted that the word "a" or "an" preceding an element in a claim does not exclude the presence of a plurality of such elements. Moreover, any reference signs do not limit the scope of the claims; the invention can be implemented by means of both hardware and software, and several "means" may be represented by the same item of hardware. Furthermore, the invention resides in each and every novel feature or combination of features.

The invention can be summarized as follows. The invention relates to an identification system, where the identifier is a body comprising an inhomogeneous material, which body is identified by subjecting it to mechanical vibrations, in particular acoustic vibrations, observing how the propagation of these mechanical vibrations is affected by inhomogeneities present in the body, and recognizing the body on the basis of a previous observation. Such an identifier body can be associated with an information carrier, allowing for the authentication of the information carrier, and for a conditional access or a copy protection scheme which can be relied upon. The acoustic identification according to the invention can be seen as an alternative to the optical identification of a body, which is known in the art, which alternative, compared to the optical identification, involves higher robustness, various simplifications in the identification system and lower costs of implementation.

## Claims

1. An identification system comprising:
- an identifier body (10) for producing a response (11) upon being challenged with a challenge (12);
- a challenging unit (13) for challenging the identifier body with the challenge, which challenging unit is capable of applying, as the challenge, a first mechanical vibration, so as to cause a second mechanical vibration;
- a detection unit (14) for detecting the response, which response is represented by the second mechanical vibration; and
- a verification unit (15) for comparing the response with authentication information (16), the authentication information being related to an expected response,
**characterized in that** the identifier body (10) comprises inhomogeneities or irregular interfaces in the identifier body (10) for affecting a mechanical vibration propagation in a way that reflects three-dimensional characteristics of the identifier body (10).

2. An identification system as claimed in claim 1, wherein
- the challenging unit (13) is capable of applying the first mechanical vibration on a first point (17) of the identifier body (10), from where it propagates to a second point (18) of the identifier body, and
- the detection unit (14) is capable of detecting the second mechanical vibration on the second point of the identifier body.

3. An identification system as claimed in claim 1, wherein:
- the challenging unit (13) is further capable of providing a set of challenges (32), the challenges of the set of challenges giving rise to respective responses (31);
- the authentication information (16) is further related to respective responses expected; and
- the verification unit (15) is further able to compare the respective responses with the authentication information.

4. An identification system as claimed in claim 3, wherein the challenging unit (13) is further able to generate a periodic mechanical vibration having a frequency, an amplitude and a waveform, and at least one of the frequency, the amplitude and the waveform is a variable parameter.

5. An identification system as claimed in claim 2 and 3, wherein at least one of the first point (17) and the second point (18) is variable.

6. An identification system as claimed in claim 1, further comprising an information carrier (40) coupled to the identifier body (10), and an apparatus for accessing the information carrier (41).

7. An identification system as claimed in claims 1 or 6, wherein the challenging unit (13) and the detection unit (14) are comprised in an apparatus for identifying the identifier body (42).

8. An identification system as claimed in claims 1 or 6, wherein the challenging unit (13) comprises:
- a first transducer (70), for emitting the first mechanical vibration; and
- a first transducer control unit (71), for controlling the first transducer; and
- the detection unit (14) comprises:
- a second transducer (72), for detecting the second mechanical vibration; and
- a second transducer control unit (73), for controlling the second transducer; and
- the first transducer control unit and the second transducer control unit are comprised in an apparatus for identifying the identifier body (42), whereas the first transducer, the second transducer and the identifier body constitute an identifier device (74).

9. An identification system as claimed in claim 8, wherein at least one of the challenging unit (13) and the detection unit (14) comprises an additional transducer (70', 72', 72").

10. An identification system as claimed in claim 8, wherein the second transducer (72) is also suitable for emitting the first mechanical vibration and the first transducer (70) is also suitable for detecting the second mechanical vibration.

11. An apparatus for identifying an identifier body (41), which identifier body (10) is producing a response (11) upon being challenged with a challenge (12), comprising:
- a first transducer control unit (71), for controlling a first transducer (70) for applying the challenge to the identifier body, which first transducer is suitable for emitting a first mechanical vibration as the challenge, so as to cause a second mechanical vibration;
- a second transducer control unit (73), for controlling a second transducer (72) for detecting the response, which response is represented by the second mechanical vibration; and - a verification unit (15) for comparing the response with authentication information (16), the authentication information being related to an expected response, **characterized in that** the apparatus is adapted for identifying the identifier body (10) based on inhomogeneities or irregular interfaces in the identifier body provided for affecting a mechanical vibration propagation in a way that reflects three-dimensional characteristics of the identifier body (10).

12. An apparatus for identifying an identifier body (41) as claimed in claim 11, further comprising the first transducer (70) and the second transducer (72), the first transducer and the first transducer control unit (71) being integral and being comprised in a challenging unit (13), the second transducer and the second transducer control unit (73) being integral and being comprised in a detection unit (14).

13. An identifier device (74) comprising an identifier body (10), for producing a response (11) upon being challenged with a challenge (12), further comprising:
- a first transducer (70), for emitting a first mechanical vibration, so as to cause a second mechanical vibration; and
- a second transducer (72), for detecting the second mechanical vibration,
**characterized in that** the identifier body (10) comprises inhomogeneities or irregular interfaces in the identifier body for affecting a mechanical vibration propagation in a way that reflects three-dimensional characteristics of the identifier body (10).

14. An identifier device (74) as claimed in claim 13, further comprising at least one additional transducer (70', 72', 72").

15. An identifier device (74) as claimed in claim 13, wherein the second transducer (72) is also suitable for emitting the first mechanical vibration and the first transducer (70) is also suitable for detecting the second mechanical vibration.

16. An information carrier (40) comprising an identifier device (74) as claimed in any of the claims 13 to 15.

17. A method for identifying an identifier body (10) for producing a response (11) upon being challenged with a challenge (12), comprising:
- a challenging step, during which the identifier body is challenged with the challenge, the challenge being a first mechanical vibration which is emitted, so as to cause a second mechanical vibration;
- a detection step, during which the response is detected, which response is represented by the second mechanical vibration; and
- a verification step, during which the response is compared with authentication information (16), the authentication information being related to an expected response, **characterized in that** inhomogeneities or irregular interfaces are provided in the identifier body (10) for affecting a mechanical vibration propagation in a way that reflects three-dimensional characteristics of the identifier body (10).

18. A key generation system comprising:
- an identifier body (10) for producing a response (11) upon being challenged with a challenge (12);
- a challenging unit (13) for challenging the identifier body with the challenge, which challenging unit is capable of applying, as the challenge, a first mechanical vibration, so as to cause a second mechanical vibration;
- a detection unit (14) for detecting the response, which response is represented by the second mechanical vibration; and
- a key extraction unit (60) for extracting a key (61) from the response,
**characterized in that** the identifier body (10) comprises inhomogeneities or irregular interfaces in the identifier body for affecting a mechanical vibration propagation in a way that reflects three-dimensional characteristics of the identifier body (10).

19. An apparatus for generating a key from an identifier body, which identifier body (10) is producing a response (11) upon being challenged with a challenge (12), comprising:
- a first transducer control unit (71), for controlling a first transducer (70) for applying the challenge to the identifier body, which first transducer is suitable for emitting a first mechanical vibration as the challenge, so as to cause a second mechanical vibration;
- a second transducer control unit (73), for controlling a second transducer (72) for detecting the response, which response is represented by the second mechanical vibration; and
- a key extraction unit (60) for extracting a key (61) from the response, **characterized in that** the apparatus is adapted for generating the key based on inhomogeneities or irregular interfaces provided in the identifier body (10) for affecting a mechanical vibration propagation in a way that reflects three-dimensional characteristics of the identifier body (10).

20. A method for generating a key (61) from an identifier body (10) for producing a response (11) upon being challenged with a challenge (12), comprising:
- a challenging step, during which the identifier body is challenged with the challenge, the challenge being a first mechanical vibration which is emitted, so as to cause a second mechanical vibration;
- a detection step, during which the response is detected, which response is represented by the second mechanical vibration; and
- a key extraction step, during which the key is extracted from the response, **characterized in that** inhomogeneities or irregular interfaces are provided in the identifier body (10) for affecting a mechanical vibration propagation in a way that reflects three-dimensional characteristics of the identifier body (10).

## Patentansprüche

1. Identifikationssystem, das die nachfolgenden Elemente umfasst:
- einen Identifiziererkörper (10) zum Erzeugen einer Reaktion (1) wenn er mit einer Herausforderung (12) herausgefordert wird,
- eine Herausforderungseinheit (13) zum herausfordern des Identifiziererkörpers mit einer Herausforderung, wobei diese Herausforderungseinheit imstande ist, als Herausforderung, eine erste mechanische Vibration anzuwenden, damit eine zweite mechanische Vibration verursacht wird.,
- eine Detektionseinheit (14) zum detektieren der Reaktion, wobei diese Reaktion durch die zweite mechanische Vibration dargestellt wird; und
- eine Verifikationseinheit (15) zum Vergleichen der Reaktion mit der Authentifikationsinformation (16), wobei die Authentifikationsinformation sich auf eine erwartete Reaktion bezieht, **dadurch gekennzeichnet, dass** der Identifiziererkörper (10) Inhomogenitäten oder unregelmäßige Schnittstellen in dem Identifiziererkörper (10) aufweist, und zwar zum Beeinflussen einer mechanischen Vibrationsfortpflanzung auf eine Art und Weise, die dreidimensionale Charakteristiken des Identifiziererkörpers (10) reflektiert.

2. Identifikationssystem nach Anspruch 1, wobei
- die Aufforderungseinheit (13) imstande ist, eine erste mechanische Vibration an einem ersten Punkt (17) des Identifiziererkörpers (10) anzuwenden, von woraus diese Vibration sich zu einem zweiten Punkt (18) des Identifiziererkörpers fortpflanzt, und
- die Detektionseinheit (14) imstande ist, die zweite mechanische Vibration an dem zweiten Punkt des Identifiziererkörpers zu detektieren.

3. Identifikationssystem nach Anspruch 1, wobei
- die Aufforderungseinheit (13) weiterhin imstande ist, einen Satz von Aufforderungen (32) zu schaffen, wobei die Aufforderungen des Satzes von Aufforderungen betreffende Reaktionen (31) veranlassen;
- die Authentifikationsinformation (16) sich weiterhin auf die betreffenden erwarteten Reaktionen bezieht; und
- die Verifikationseinheit (15) weiterhin imstande ist, die betreffenden Reaktionen mit der Authentifikationsinformation zu vergleichen.

4. Identifikationssystem nach Anspruch 3, wobei die Aufforderungseinheit (13) weiterhin imstande ist, eine periodische mechanische Vibration mit einer Frequenz, einer Amplitude und einer Wellenform zu erzeugen, wobei wenigstens die Frequenz, die Amplitude oder die Wellenform ein variabler Parameter ist.

5. Identifikationssystem nach Anspruch 2 und 3, wobei wenigstens der erste Punkt (17) oder der zweite Punkt (18) variabel ist.

6. Identifikationssystem nach Anspruch 1, das weiterhin einen Informationsträger (40) aufweist, der mit dem Identifiziererkörper (10) gekoppelt ist, und eine Anordnung zum Zugreifen auf den Informationsträger (41).

7. Identifikationssystem nach Anspruch 1 oder 6, wobei die Aufforderungseinheit (13) und die Detektionseinheit (14) in einer Anordnung zum Identifizieren des Identifiziererkörpers (42) vorgesehen sind.

8. Identifikationssystem nach Anspruch 1 oder 6, wobei die Aufforderungseinheit (13) Folgendes umfasst:
- einen ersten Wandler (70) zum Emittieren der ersten mechanischen Vibration; und
- eine erste Wandlersteuereinheit (71) zur Steuerung des ersten Wandlers; und
wobei die Detektionseinheit (14) Folgendes umfasst:
- einen zweiten Wandler (72) zum Detektieren der zweiten mechanischen Vibration; und
- eine zweite Wandlersteuereinheit (73) zur Steuerung des zweiten Wandlers; und
wobei die erste Wandlersteuereinheit und die zweite Wandlersteuereinheit in einer Anordnung zum Identifizieren des Identifiziererkörpers (42) vorgesehen sind, während der erste Wandler, der zweite Wandler und der Identifiziererkörper eine Identifiziereranordnung (74) bilden.

9. Identifikationssystem nach Anspruch 8, wobei wenigstens die Aufforderungseinheit (13) oder die Detektionseinheit (14) einen zusätzlichen Wandler (70', 72', 72") aufweist.

10. Identifikationssystem nach Anspruch 8, wobei der zweite Wandler (72) ebenfalls zum Emittieren der ersten mechanischen Vibration geeignet ist und der erste Wandler (70) ebenfalls zum Detektieren der zweiten mechanischen Vibration geeignet ist.

11. Anordnung zum Identifizieren eines Identifiziererkörpers (41), wobei dieser Identifiziererkörper (10) eine Reaktion (11) darauf schafft, dass er mit einer Aufforderung (12) aufgefordert wird, wobei diese Anordnung Folgendes umfasst:
- eine erste Wandlersteuereinheit (71) zur Steuerung eines ersten Wandlers (70) zur Anwendung der Aufforderung auf den Identifiziererkörper, wobei dieser erste Wandler zum Emittieren einer ersten mechanischen Vibration als Aufforderung geeignet ist, damit eine zweite mechanische Vibration verursacht wird;
- eine zweite Wandlersteuereinheit (73) zur Steuerung eines zweiten Wandlers (72) zur Detektion der Reaktion, wobei diese Reaktion durch die zweite mechanische Vibration dargestellt wird; und
- eine Verifikationseinheit (15) zum vergleichen der Reaktion mit der Authentifikationsinformation (16), wobei diese Authentifikationsinformation sich auf eine erwartete Reaktion bezieht,
**dadurch gekennzeichnet, dass** die Anordnung zum Identifizieren des Identifiziererkörpers (10) vorgesehen ist. Und zwar auf Basis von Inhomogenitäten oder unregelmäßigen Schnittstellen in dem Identifiziererkörper, vorgesehen zum Beeinflussen einer mechanischen Vibrationsfortpflanzung auf eine Art und Weise, die dreidimensionale Charakteristiken des Identifiziererkörpers (10) reflektiert.

12. Anordnung zum Identifizieren eines Identifiziererkörpers (41) nach Anspruch 11, wobei diese Anordnung weiterhin den ersten Wandler (70) und den zweiten Wandler (72) aufweist, wobei der erste Wandler und die erste Wandlersteuereinheit (71) eine integrale Einheit bilden und in einer Aufforderungseinheit (13) vorgesehen sind, wobei der zweite Wandler und die zweite Wandlersteuereinheit (73) eine integrale Einheit sind und in einer Detektionseinheit (14) vorgesehen sind.

13. Identifiziereranordnung (74) mit einem Identifiziererkörper (10) zum Erzeugen einer Reaktion (11) darauf, dass er mit einer Aufforderung (12) aufgefordert worden ist, wobei diese Anordnung weiterhin Folgendes umfasst:
- eine ersten Wandler (70) zum Emittieren einer ersten mechanischen Vibration, um eine zweite mechanische Vibration zu verursachen; und
- einen zweiten Wandler (72) zum Detektieren der zweiten mechanischen Vibration,
**dadurch gekennzeichnet, dass** der Identifiziererkörper (10) Inhomogenitäten oder unregelmäßige Schnittstellen in dem Identifiziererkörper aufweist zum Beeinflussen einer mechanischen Vibrationsfortpflanzung auf eine Art und Weise, die dreidimensionale Charakteristiken des Identifiziererkörpers (10) reflektiert.

14. Identifiziereranordnung (74) nach Anspruch 13, die weiterhin wenigstens einen zusätzlichen Wandler (70' 72', 72") aufweist.

15. Identifiziereranordnung (74) nach Anspruch 13, wobei der zweite Wandler (72) ebenfalls zum Emittieren der ersten mechanischen Vibration geeignet ist und wobei der erste Wandler (70) ebenfalls imstande ist, die zweite mechanische Vibration zu detektieren.

16. Informationsträger (40) mit einer Identifiziereranordnung (74) nach einem der Ansprüche 13 bis 15.

17. Verfahren zum Identifizieren eines Identifiziererkörpers (10) zum Erzeugen einer Reaktion (11) darauf, dass der Körper mit einer Aufforderung (12) aufgefordert wird, wobei dieses Verfahren die nachfolgenden Verfahrensschritte umfasst:
- einen Aufforderungsschritt, in dem der Identifiziererkörper mit der Aufforderung aufgefordert wird, wobei die Aufforderung eine erste mechanische Vibration ist, die emittiert wird, damit eine zweite mechanische Vibration verursacht wird;
- einen Detektionsschritt, in dem die Reaktion detektiert wird, wobei diese Reaktion durch die zweite mechanische Vibration dargestellt wird; und
- einen Verifikationsschritt, in dem die Reaktion mit Authentifikationsinformation (16) verglichen wird, wobei die Authentifikationsinformation sich auf eine erwartete Reaktion bezieht,
**dadurch gekennzeichnet, dass** Inhomogenitäten oder unregelmäßige Schnittstellen in dem Identifiziererkörper (10) vorgesehen sind, und zwar zum Beeinflussen einer mechanischen Vibrationsfortpflanzung auf eine Art und Weise, die dreidimensionale Charakteristiken des Identifiziererkörpers (10) reflektiert.

18. Schlüsselerzeugungssystem, das Folgendes umfasst:
- einen Identifiziererkörper (10) zum Erzeugen einer Reaktion (11) darauf. Dass der Körper mit einer Aufforderung (12) aufgefordert wird;
- eine Aufforderungseinheit (13) zum Auffordern des Identifiziererkörpers mit der Aufforderung, wobei diese Aufforderungseinheit imstande ist, als Aufforderung eine erste mechanische Vibration anzuwenden, damit eine zweite mechanische Vibration verursacht wird;
- eine Detektionseinheit (14) zum Detektieren der Reaktion, wobei diese Reaktion durch die zweite mechanische Vibration dargestellt wird; und
- eine Schlüsselextraktionseinheit (60) zum Extrahieren eines Schlüssels (61) aus der Reaktion, **dadurch gekennzeichnet, dass** der Identifiziererkörper (10) Inhomogenitäten oder unregelmäßige Schnittstellen in dem Identifiziererkörper aufweist zum Beeinflussen einer mechanischen Vibrationsfortpflanzung auf eine Art und Weise, die dreidimensionale Charakteristiken des Identifiziererkörpers (10) reflektiert.

19. Anordnung zum Erzeugen eines Schlüssels aus einem Identifiziererkörper, wobei dieser Identifiziererkörper (10) eine Reaktion (11) erzeugt, und zwar wenn er mit einer Aufforderung (12) aufgefordert wird, wobei diese Anordnung Folgendes umfasst:
- eine erste Wandlersteuereinheit (71) zur Steuerung eines ersten Wandlers (70) zur Anwendung der Aufforderung auf den Identifiziererkörper, wobei dieser erste Wandler imstande ist, eine erste mechanische Vibration als Aufforderung zu emittieren, damit eine zweite mechanische Vibration verursacht wird;
- eine zweite Wandlersteuereinheit (73) zur Steuerung eines zweiten Wandlers (72) zum Detektieren der Reaktion, wobei diese Reaktion durch die zweite mechanische Vibration dargestellt wird; und
- eine Schlüsselextraktionseinheit (60) zum Extrahieren eines Schlüssels (61) aus der Reaktion,
**dadurch gekennzeichnet, dass** die Anordnung zum Erzeugen des Schlüssels vorgesehen ist, und zwar auf Basis von Inhomogenitäten oder unregelmäßigen Schnittstellen in dem Identifiziererkörper (10) zum Beeinflussen einer mechanischen Vibrationsfortpflanzung auf eine Art und Weise, die dreidimensionale Charakteristiken der Identifiziererkörpers (10) reflektiert.

20. Verfahren zum Erzeugen eines Schlüssels (61) aus einem Identifiziererkörper (10) zum Erzeugen einer Reaktion (11) darauf, dass dieser mit einer Aufforderung (12) aufgefordert wird, wobei dieses Verfahren die nachfolgenden Verfahrensschritte umfasst:
- einen Aufforderungsschritt, in dem der Identifiziererkörper mit der Aufforderung aufgefordert wird, wobei die Aufforderung eine erste mechanische Vibration ist, die emittiert wird, um eine zweite mechanische Vibration zu verursachen;
- einen Detektionsschritt, in dem die Reaktion detektiert wird, wobei diese Reaktion durch die zweite mechanische Vibration dargestellt wird; und
- einen Schlüsselextraktionsschritt, in dem der Schlüssel aus der Reaktion extrahiert wird,
**dadurch gekennzeichnet, dass** Inhomogenitäten oder unregelmäßige Schnittstellen in dem Identifiziererkörper (10) vorgesehen sind, und zwar zum Beeinflussen einer mechanischen Vibrationsfortpflanzung auf eine Art und Weise, die dreidimensionale Charakteristiken des Identifiziererkörpers (10) reflektiert.

## Revendications

1. Système d'identification comprenant :
- un corps d'identification (10) pour produire une réponse (11) lorsqu'il est mis à l'épreuve avec une épreuve (12) ;
- une unité d'épreuve (13) pour mettre à l'épreuve le corps d'identification avec l'épreuve, laquelle unité d'épreuve est capable d'appliquer, en tant qu'épreuve, une première vibration mécanique, afin d'entraîner une seconde vibration mécanique ;
- une unité de détection (14) pour détecter la réponse, laquelle réponse est représentée par la seconde vibration mécanique ; et
- une unité de vérification (15) pour comparer la réponse à des informations d'authentification (16), les informations d'authentification étant connexes à une réponse escomptée, **caractérisé en ce que** le corps d'identification (10) comprend des non-homogénéités ou interfaces irrégulières dans le corps d'identification (10) pour affecter une propagation de vibration mécanique d'une manière qui réfléchit des caractéristiques tridimensionnelles du corps d'identification (10).

2. Système d'identification selon la revendication 1, dans lequel
- l'unité d'épreuve (13) est capable d'appliquer la première vibration mécanique sur un premier point (17) du corps d'identification (10), d'où elle se propage jusqu'à un second point (18) du corps d'identification, et
- l'unité de détection (14) est capable de détecter la seconde vibration mécanique sur le second point du corps d'identification.

3. Système d'identification selon la revendication 1, dans lequel :
- l'unité d'épreuve (13) est en outre capable de fournir un jeu d'épreuves (32), les épreuves du jeu d'épreuves entraînant des réponses respectives (31) ;
- les informations d'authentification (16) sont en outre connexes à des réponses respectives escomptées ; et
- l'unité de vérification (15) est en outre capable de comparer les réponses respectives aux informations d'authentification.

4. Système d'identification selon la revendication 3, dans lequel l'unité d'épreuve (13) est en outre capable de générer une vibration mécanique périodique possédant une fréquence, une amplitude et une forme d'onde, et au moins une parmi la fréquence, l'amplitude et la forme d'onde est un paramètre variable.

5. Système d'identification selon la revendication 2 et 3, dans lequel au moins un parmi le premier point (17) et le second point (18) est variable.

6. Système d'identification selon la revendication 1, comprenant en outre un support d'information (40) couplé au corps d'identification (10), et un appareil pour accéder au support d'information (41).

7. Système d'identification selon les revendications 1 ou 6, dans lequel l'unité d'épreuve (13) et l'unité de détection (14) sont comprises dans un appareil pour identifier le corps d'identification (42).

8. Système d'identification selon les revendications 1 ou 6, dans lequel l'unité d'épreuve (13) comprend :
- un premier transducteur (70), pour émettre la première vibration mécanique ; et
- une unité de commande de premier transducteur (71), pour commander le premier transducteur ; et
- l'unité de détection (14) comprend :
- un second transducteur (72), pour détecter la seconde vibration mécanique ; et
- une unité de commande de second transducteur (73), pour commander le second transducteur ; et
- l'unité de commande de premier transducteur et l'unité de commande de second transducteur sont comprises dans un appareil pour identifier le corps d'identification (42), alors que le premier transducteur, le second transducteur et le corps d'identification constituent un dispositif d'identification (74).

9. Système d'identification selon la revendication 8, dans lequel au moins une parmi l'unité d'épreuve (13) et l'unité de détection (14) comprend un transducteur supplémentaire (70', 72', 72").

10. Système d'identification selon la revendication 8, dans lequel le second transducteur (72) est également approprié pour émettre la première vibration mécanique et le premier transducteur (70) est également approprié pour détecter la seconde vibration mécanique.

11. Appareil pour identifier un corps d'identification (41), lequel corps d'identification (10) produit une réponse (11) lorsqu'il est mis à l'épreuve avec une épreuve (12), comprenant :
- une unité de commande de premier transducteur (71), pour commander un premier transducteur (70) pour appliquer l'épreuve sur le corps d'identification, lequel premier transducteur est approprié pour émettre une première vibration mécanique en tant qu'épreuve, afin d'entraîner une seconde vibration mécanique ;
- une unité de commande de second transducteur (73), pour commander un second transducteur (72) pour détecter la réponse, laquelle réponse est représentée par la seconde vibration mécanique ; et
- une unité de vérification (15) pour comparer la réponse à des informations d'authentification (16), les informations d'authentification étant connexes à une réponse escomptée,
**caractérisé en ce que** l'appareil est adapté pour identifier le corps d'identification (10) sur la base de non-homogénéités ou interfaces irrégulières dans le corps d'identification prévues pour affecter une propagation de vibration mécanique d'une manière qui réfléchit des caractéristiques tridimensionnelles du corps d'identification (10).

12. Appareil pour identifier un corps d'identification (41) selon la revendication 11, comprenant en outre le premier transducteur (70) et le second transducteur (72), le premier transducteur et l'unité de commande de premier transducteur (71) étant solidaires et étant compris dans une unité d'épreuve (13), le second transducteur et l'unité de commande de second transducteur (73) étant solidaires et étant compris dans une unité de détection (14).

13. Dispositif d'identification (74) comprenant un corps d'identification (10), pour produire une réponse (11) lorsqu'il est mis à l'épreuve avec une épreuve (12), comprenant en outre :
- un premier transducteur (70), pour émettre une première vibration mécanique, afin d'entraîner une seconde vibration mécanique ; et
- un second transducteur (72), pour détecter la seconde vibration mécanique,
**caractérisé en ce que** le corps d'identification (10) comprend des non-homogénéités ou interfaces irrégulières dans le corps d'identification pour affecter une propagation de vibration mécanique d'une manière qui réfléchit des caractéristiques tridimensionnelles du corps d'identification (10).

14. Dispositif d'identification (74) selon la revendication 13, comprenant en outre au moins un transducteur supplémentaire (70', 72', 72").

15. Dispositif d'identification (74) selon la revendication 13, dans lequel le second transducteur (72) est également approprié pour émettre la première vibration mécanique et le premier transducteur (70) est également approprié pour détecter la seconde vibration mécanique.

16. Support d'information (40) comprenant un dispositif d'identification (74) selon l'une quelconque des revendications 13 à 15.

17. Procédé pour identifier un corps d'identification (10) pour produire une réponse (11) lorsqu'il est mis à l'épreuve avec une épreuve (12), comprenant :
- une étape d'épreuve, au cours de laquelle le corps d'identification est mis à l'épreuve avec l'épreuve, l'épreuve étant une première vibration mécanique qui est émise, afin d'entraîner une seconde vibration mécanique ;
- une étape de détection, au cours de laquelle la réponse est détectée, laquelle réponse est représentée par la seconde vibration mécanique ; et
- une étape de vérification, au cours de laquelle la réponse est comparée à des informations d'authentification (16), les informations d'authentification étant connexes à une réponse escomptée,
**caractérisé en ce que** des non-homogénéités ou interfaces irrégulières sont prévues dans le corps d'identification (10) pour affecter une propagation de vibration mécanique d'une manière qui réfléchit des caractéristiques tridimensionnelles du corps d'identification (10).

18. Système de génération de clef comprenant :
- un corps d'identification (10) pour produire une réponse (11) lorsqu'il est mis à l'épreuve avec une épreuve (12) ;
- une unité d'épreuve (13) pour mettre à l'épreuve le corps d'identification avec l'épreuve, laquelle unité d'épreuve est capable d'appliquer, en tant qu'épreuve, une première vibration mécanique, afin d'entraîner une seconde vibration mécanique ;
- une unité de détection (14) pour détecter la réponse, laquelle réponse est représentée par la seconde vibration mécanique ; et
- une unité d'extraction de clef (60) pour extraire une clef (61) à partir de la réponse,
**caractérisé en ce que** le corps d'identification (10) comprend des non-homogénéités ou interfaces irrégulières dans le corps d'identification pour affecter une propagation de vibration mécanique d'une manière qui réfléchit des caractéristiques tridimensionnelles du corps d'identification (10).

19. Appareil pour générer une clef à partir d'un corps d'identification, lequel corps d'identification (10) produit une réponse (11) lorsqu'il est mis à l'épreuve avec une épreuve (12), comprenant :
- une unité de commande de premier transducteur (71), pour commander un premier transducteur (70) pour appliquer l'épreuve sur le corps d'identification, lequel premier transducteur est approprié pour émettre une première vibration mécanique en tant qu'épreuve, afin d'entraîner une seconde vibration mécanique ;
- une unité de commande de second transducteur (73), pour commander un second transducteur (72) pour détecter la réponse, laquelle réponse est représentée par la seconde vibration mécanique ; et
- une unité d'extraction de clef (60) pour extraire une clef (61) à partir de la réponse,
**caractérisé en ce que** l'appareil est adapté pour générer la clef sur la base de non-homogénéités ou interfaces irrégulières prévues dans le corps d'identification (10) pour affecter une propagation de vibration mécanique d'une manière qui réfléchit des caractéristiques tridimensionnelles du corps d'identification (10).

20. Procédé pour générer une clef (61) à partir d'un corps d'identification (10) pour produire une réponse (11) lorsqu'il est mis à l'épreuve avec une épreuve (12), comprenant :
- une étape d'épreuve, au cours de laquelle le corps d'identification est mis à l'épreuve avec l'épreuve, l'épreuve étant une première vibration mécanique qui est émise, afin d'entraîner une seconde vibration mécanique ;
- une étape de détection, au cours de laquelle la réponse est détectée, laquelle réponse est représentée par la seconde vibration mécanique ; et
- une étape d'extraction de clef, au cours de laquelle la clef est extraite à partir de la réponse,
**caractérisé en ce que** des non-homogénéités ou interfaces irrégulières sont prévues dans le corps d'identification (10) pour affecter une propagation de vibration mécanique d'une manière qui réfléchit des caractéristiques tridimensionnelles du corps d'identification (10).
